# EUROPEAN PATENT SPECIFICATION

(11) **EP 4 407 015 B1**
(45) Date of publication and mention of the grant of the patent: **23.07.2025**
(21) Application number: 22872873.9
(22) Date of filing: 20.09.2022
(51) Int. Cl.: C10M 141/08, C10N 10/04, C10N 30/06, C10N 40/00, C10N 40/02, C10N 50/10, F16C 19/06, C10N 10/02, C10N 10/12

(54) **GREASE COMPOSITION AND GREASE-SEALED BEARING**
SCHMIERFETTZUSAMMENSETZUNG UND SCHMIERFETTDICHTES LAGER
COMPOSITION DE GRAISSE ET ROULEMENT ÉTANCHE À LA GRAISSE

(30) Priority: 23.09.2021 JP 2021154973
(43) Date of publication of application: 31.07.2024
(73) Proprietor: NTN Corporation, Osaka-shi, Osaka 530-0005 (JP)
(72) Inventor: KAWAMURA, Takayuki, Kuwana-shi, Mie 511-0867 (JP)
(74) Representative: Henkel & Partner mbB
(86) International application number: PCT/JP2022/034923
(87) International publication number: WO 2023/048119

(56) References cited:
- WO-A1-2016/147969
- WO-A1-2021/153258
- JP-A- 2007 177 063
- JP-A- 2007 327 638
- JP-A- 2013 035 882
- US-A1- 2018 230 396

## Description

### TECHNICAL FIELD

The present invention relates to a grease composition and a grease-sealed bearing in which the grease composition is sealed, in particular, relates to a grease composition used in a rolling bearing for automobile electric devices, automobile auxiliary devices or servo motors.

### BACKGROUND ART

A rolling bearing is employed in a rotational part of each component such as an electric device and an auxiliary device in automobiles and a motor in an industrial machine. Examples of the automobile electric device and the automobile auxiliary device include an alternator, a pulley, an electromagnetic clutch for automobile air conditioners, a fan coupling device, and an electric fan motor. An idler pulley for automobiles is used as a belt tensioner for a driving belt that transmits a rotation of a combustion engine to the automobile auxiliary device. Grease is sealed in the rolling bearing used for these devices in order to impart a lubrication property thereto.

As a use condition of the rolling bearing becomes severe, a specific flaking with white structure change is caused on a rolling surface early. This specific flaking is a break phenomenon caused from a portion relatively near from the rolling surface, which is different from the flaking from an inside of the rolling surface caused by general metal fatigue. It has been considered that the specific flaking is hydrogen embrittlement caused by hydrogen. For example, it is considered that, when the grease is decomposed and thus hydrogen is generated, the hydrogen invades the steel of the rolling bearing, so that the early-flaking due to the hydrogen embrittlement is caused. Since hydrogen deteriorates the fatigue strength of the steel, even in a condition of elastic fluid lubrication in which the contact parts are separated by oil film, a crack is caused near the inside of the rolling surface on which the maximum alternate shear stress is caused, and then the crack is propagated to cause the early-flaking.

Conventionally, various methods have been considered for preventing the specific flaking phenomenon with the white structure change caused early. For example, a method that adds molybdate and organic salt as additives into the grease has been disclosed (see Patent Document 1).

JP 2007 327638 A discloses a grease composition intended to reduce early-flaking in a roller bearing.

### PRIOR ART DOCUMENT

### PATENT DOCUMENT

Patent Document 1: JP 2005-112902 A

### SUMMERY OF THE INVENTION

### PROBLEMS TO BE SOLVED BY THE INVENTION

In recent years, rapid acceleration and rapid deceleration are added together with high load and high speed into the use condition of the rolling bearing, and thus the use condition becomes severe more and more. In the severe condition, surface pressure on a portion between a rolling element and a raceway ring is increased and sliding is largely caused due to the rapid acceleration and the rapid deceleration.

Consequently, the break of oil film (lubrication failure) on the contact portion is caused easily. Thus, further improved lubricant has been required for preventing the early-flaking in such an environment.

An object of the present invention is, in order to solve such problems, to provide a grease composition that is capable of effectively preventing early-flaking due to hydrogen embrittlement, and further to provide a grease-sealed bearing in which the grease composition is sealed.

### MEANS FOR SOLVING THE PROBLEMS

The above object is achieved by a grease composition according to claim 1. The dependent claims are directed to different advantageous aspects of the invention.

Additionally, the invention provides a grease-sealed bearing of the present invention including an inner ring, an outer ring, a plurality of rolling elements that are interposed between the inner ring and the outer ring, and a grease composition that is sealed around the rolling elements. The grease composition is the above-described grease composition of the present invention. Further, the grease-sealed bearing may be configured to be used in a rapid acceleration and rapid deceleration condition, and the grease composition may be configured to lubricate contact surfaces of iron-based metal members of the grease-sealed bearing.

### EFFECT OF THE INVENTION

In the grease of the present invention, the additive contains sodium molybdate as an essential component, and sorbitan-based ester or metal sulfonate. The metal sulfonate is Ca sulfonate or Zn sulfonate. The content of the metal sulfonate is less than 3 parts by mass relative to 100 parts by mass of the total of the base oil and the thickener. Accordingly, the grease composition can effectively suppress an early-flaking due to hydrogen embrittlement.

Since the sorbitan-based ester employed with the sodium molybdate is the sorbitan trioleate, superior flaking generation suppressing effect can be obtained. Further, since the content of the sorbitan-based ester is equal to or less than the content of the sodium molybdate, superior flaking generation suppressing effect can be obtained.

The grease-sealed bearing of the present invention includes an inner ring, an outer ring, a plurality of rolling elements that are interposed between the inner ring and the outer ring, and the grease composition of the present invention that is sealed around the rolling elements. Accordingly, even in a severe use condition, an early-flaking due to hydrogen embrittlement can be suppressed, and thus the grease-sealed bearing can be used for a long time.

### BRIEF DESCRIPTION OF THE DRAWINGS

Fig. 1 is a sectional view of a deep groove ball bearing that is an example of a grease-sealed bearing of the present invention.
Fig. 2 is a sectional view of an alternator that employs the grease-sealed bearing of the present invention.

### MODE FOR CARRYING OUT THE INVENTION

The present inventors conducted a study relating to a grease composition for lubrication in order to prevent early-flaking from causing on a rolling surface due to hydrogen embrittlement. As a result, the present inventors found that an unexpectedly superior early-flaking generation suppressing effect can be obtained using an additive that contains sodium molybdate as an essential component, and also contains a specified amount of sorbitan-based ester or metal sulfonate (Ca sulfonate or Zn sulfonate).

In a rolling bearing, when iron-based members such as a rolling element and a raceway ring, or the rolling element and a cage, slide on each other while being in contact with each other, oil film disappears on contact surfaces of the iron-based members in a severe condition with a rapid acceleration and rapid deceleration, and a boundary lubrication condition in which metal surfaces are partially in direct-contact with each other might be caused. In this manner, even in a case in which the oil film becomes thin in a severe condition (the boundary lubrication condition) on the sliding surfaces, the sodium molybdate forms oxide film and the sorbitan-based ester or the metal sulfonate forms film (absorption film), on a friction wear surface or an iron-based metal newly formed surface exposed by the wear, of the contact part, so that the iron-based metal newly formed surface is prevented from being in direct-contact with the grease. Thus, generation of hydrogen due to the decomposition of the grease is suppressed, and the hydrogen is restricted from invading the steel. Accordingly, it is considered that a specific flaking due to hydrogen embrittlement can be suppressed or prevented, and the lifetime of the rolling bearing can be extended. The present invention is derived from such knowledge.

The grease composition of the present invention contains a base oil, a thickener, and an additive. The additive contains sodium molybdate as an essential component, and also contains sorbitan-based ester or metal sulfonate. In a case in which the grease composition contains the metal sulfonate, the metal sulfonate is Ca sulfonate or Zn sulfonate, and the content of the metal sulfonate is less than 3 parts by mass relative to 100 parts by mass of the total of the base oil and the thickener.

Any of sodium molybdate anhydride and sodium molybdate hydrate may be employed in the present invention. The content of the sodium molybdate is 0.1-5 parts by mass relative to 100 parts by mass of the total of the base oil and the thickener. With the content within this range, the specific flaking due to hydrogen embrittlement can be easily suppressed. The content of the sodium molybdate is preferably 0.1-2 parts by mass, further more preferably 1-2 parts by mass. The sodium molybdate reacts with an iron-based metal newly formed surface as described above, so as to form iron oxide and an oxide film containing a molybdenum compound. As a result, decomposition of the grease composition, which is caused by the metal newly formed surface serving as a catalyst, is suppressed, so that generation of hydrogen is suppressed.

Examples of the Ca sulfonate employed in the present invention include a calcium salt of petroleum sulfonic acid and a calcium salt of alkyl aromatic sulfonic acid such as dinonyl naphthalene sulfonic acid and alkyl benzene sulfonic acid. Any one of these Ca sulfonates may be employed alone, or a combination of two or more of these Ca sulfonates may be employed. Further, examples of the Zn sulfonate include a zinc salt of petroleum sulfonic acid such as phenol zinc sulfonic acid and a zinc salt of alkyl aromatic sulfonic acid such as dinonyl naphthalene sulfonic acid and alkyl benzene sulfonic acid.

The Ca sulfonate is not limited to neutral Ca sulfonate and thus perbasic Ca sulfonate (hereinafter, referred to as basic Ca sulfonate) obtained by evenly dispersing fine particles of calcium hydroxide, etc. into the neutral Ca sulfonate may be also employed. Total base number (TBN) of the Ca sulfonate is not especially limited, and the TBN is preferably 10-500 mgKOH/g, more preferably 50-400 mgKOH/g, and further more preferably 100-400 mgKOH/g. In a case in which the perbasic Ca sulfonate is employed as the Ca sulfonate, calcium carbonate in the perbasic Ca sulfonate shows a function similar to the thickener, and accordingly the change of the worked penetration is suppressed and the shear stability is obtained. The TBN is measured based on JIS K 2501. The TBN is defined as the number of milligram (mg) of potassium hydroxide equivalent to hydrochloric acid or perchloric acid required to neutralize the whole basic components in the specimen of 1 gram. The TBN is measured by, for example, a perchloric acid method.

The content of the Ca sulfonate or the Zn sulfonate relative to 100 parts by mass of the total of the base oil and the thickener is less than 3 parts by mass. The lower limit of the content is not especially limited, however it is preferable that the content is 0.1 parts by mass or more relative to the total of the base oil and the thickener. With the content within this range, a specific flaking due to hydrogen embrittlement can be sufficiently suppressed. The content is more preferably 0.1 parts by mass or more and less than 2 parts by mass, further more preferably **0.1** parts by mass or more and less than 1.5 parts by mass.

An example of the sorbitan-based ester employed in the present invention includes sorbitan fatty acid ester such as sorbitan laurate, sorbitan monooleate, sorbitan trioleate, sorbitan tribehenate, sorbitan stearate, sorbitan tristearate, and sorbitan caprylate.

It is considered that a surface of the particle of the sodium molybdate dispersed into the grease composition and the sorbitan-based ester react with each other, so that the sorbitan-based ester forms absorption film on the surface of the particle to stabilize the particle. Specifically, the sorbitan-based ester has a tetrahydrofuran structure (a cyclic ring ether structure having a five-membered ring) having an appropriate coordination ability and thus has superior dispersing property for the sodium molybdate. Accordingly, it is considered that fine sodium molybdate stably exits in the grease composition for a long time without being coagulated to effectively form oxide film or the like. The absorption film of the sorbitan-based ester is formed also on a surface of a bearing rolling surface, so that the flaking generation suppressing effect can be enhanced.

As the sorbitan-based ester, sorbitan monooleate or sorbitan trioleate is preferable, and the sorbitan trioleate is more preferable from a viewpoint of the dispersing property for the sodium molybdate. In a case in which the sorbitan-based ester is the sorbitan trioleate, many alkyl chains exist as a side chain relative to a tetrahydrofuran structure as a coordination site, compared to the sorbitan monooleate, which largely causes steric hindrance. Consequently, the dispersing property of the grease composition for the fine particle of the sodium molybdate is superior, which facilitates the generation of the oxide film, so that the flaking generation suppressing effect can be enhanced.

The content of the sorbitan-based ester relative to 100 parts by mass of the total of the base oil and the thickener is preferably 0.05-5 parts by mass, more preferably 0.1-4 parts by mass, further more preferably **0.5-2.5** parts by mass. In a case in which the content of the sorbitan-based ester is less than 0.05 parts by mass, the dispersing effect for the sodium molybdate and the flaking generation suppressing effect might be inferior. In a case in which the content of the sorbitan-based ester is more than 5 parts by mass, the dispersing effect for the sodium molybdate and the flaking generation suppressing effect might reach the peaks.

The content of the sorbitan-based ester in the grease composition of the present invention is preferably equal to or less than the content of the sodium molybdate. In a case in which the content of the sorbitan-based ester exceeds the content of the sodium molybdate, the flaking generation suppressing effect might be inferior.

The present invention may employ a wet grinding method for producing the grease composition in which the sodium molybdate is dispersed. For example, the sodium molybdate that has no affinity with a liquid phase of a certain amount of the base oil is grinded in presence of sorbitan-based ester, and then the mixture thereof is added into the base oil or the base grease. With this method, the sodium molybdate is easily surrounded by the sorbitan-based ester, so that the dispersing property is enhanced and coagulation and precipitation are hardly caused.

The base oil employed in the grease composition of the present invention is not especially limited as long as the base oil is normally used in a rolling bearing. Examples of the base oil include mineral oil such as paraffin mineral oil and naphthenic mineral oil, synthetic hydrocarbon oil such as PAO oil and alkylbenzene oil, ester oil, ether oil, silicone oil, and fluorine oil. Any one of these base oils may be employed alone, or a combination of two or more of these base oils may be employed. The base oil preferably contains at least the synthetic hydrocarbon oil.

The PAO oil is preferable as the synthetic hydrocarbon oil. The PAO oil is α-olefin or isomerized α-olefin oligomer or polymer compound. Examples of the α-olefin includes 1-Octene, 1-Nonene, 1-Decene, 1-Dodecene, 1-Tridecene, 1-Tetradecene, 1-Pentadecene, 1-Hexadecene, 1-Heptadecene, 1-Octadecene, 1-Nonadecene, 1-Eicosene, 1-Docosene, and 1-Tetradocosene. Normally, a mixture of any these α-olefins is employed.

Examples of a further preferable aspect of the base oil include the base oil that is formed of only the PAO oil, a base oil that is a mixed oil formed of the PAO oil and the ether oil, and a base oil that is a mixed oil of the PAO oil and the ester oil.

Examples of the ether oil include polyphenyl ether oil, aklyldiphenyl ether oil, aklyltriphenyl ether oil, and alkyltetraphenyl ether oil. Of these ether oils, alkyldiphenyl ether oil is preferable because of its superior high temperature resistance. Examples of the alkyldiphenyl ether oil include monoalkyldiphenyl ether oil, dialkyldiphenyl ether oil, and polyalkyldiphenyl ether oil.

Examples of the ester oil include polyol ester oil, phosphate ester oil, polymer ester oil, aromatic ester oil, carbonate ester oil, diester oil, and polyglycol oil. Of these ester oils, the polyol ester oil is preferable because it has high viscosity index and is usable in wide temperature range. Examples of the polyol ester oil include trimethylpropane caprylate, trimethylolpropane pelargonate, pentaerythritol 2-ethylhexanoate, and pentaerythritol pelargonate.

The kinematic viscosity of the base oil (in a case of mixed oil, the kinematic viscosity of the mixed oil) at 40 °C is preferably 10-200 mm²/s, more preferably 20-100 mm²/s, further more preferably 40-100 mm²/s.

The grease composition contains the base oil preferably by 60-95 mass% relative to a total amount (base grease) of the base oil and the thickener. In a case in which the content of the base oil is less than 60mass%, the lifetime might be reduced. In case in which the content of the base oil is more than 95 mass%, the thickener is relatively decreased and thereby it might be difficult to be turned into a greasy state. The grease composition contains the base oil more preferably by 70-90 mass% relative to the total amount of the base oil and the thickener.

The thickener employed in the grease composition of the present invention is not especially limited, and therefore a general thickener normally used in a field of grease may be employed. For example, soap-based thickener such as metal soap and complex metal soap, or non-soap-based thickener such as bentone, silica gel, urea compound, and urea-urethane compound may be employed. Examples of the metal soap include sodium soap, calcium soap, aluminum soap and lithium soap. Examples of the urea compound and the urea-urethane compound include diurea compound, triurea compound, tetraurea compound, other polyurea compound, and diurethane compound. Of these thickeners, it is preferable to employ the diurea compound as the thickener.

The diurea compound is obtained by causing a diisocyanate component and a monoamine component to react with each other. Examples of the diisocyanate component include phenylene diisocyanate, and diphenylmethane diisocyanate (MDI). As the diurea compound, aliphatic diurea compound, alicyclic diurea compound, or aromatic diurea compound may be employed, which are distinguished by a kind of substituent group of the used monoamine component. In a case of the aliphatic diurea compound, aliphatic monoamine (octyl amine or the like) is employed as the monoamine component. In a case of the alicyclic diurea compound, alicyclic monoamine (cyclohexylamine or the like) is employed as the monoamine component. In a case of the aromatic diurea compound, aromatic monoamine (p-toluidine or the like) is employed as the monoamine component. The base grease that contains the diurea compound as the thickener is formed by causing the diisocyanate component and the monoamine component to react with each other in the base oil.

The grease composition contains the thickener by 10-20 mass% relative to the total amount (base grease) of the base oil and the thickener.

Other additive(s) may be further added to the grease composition of the present invention to such an extent that does not deteriorate the nature of the present invention. Examples of the additives include an antioxidant such as amine-based compound, phenol-based compound and sulfur-based compound, an antirust agent such as sulfonate, and an oily agent such as ester and alcohol.

The worked penetration (JIS K 2220) of the grease composition of the present invention is preferably in a range of 200-350. In a case in which the worked penetration is less than 200, a lack of lubrication might be caused because of less oil separation. In a case in which the worked penetration is more than 350, the grease composition is so soft that the grease composition is liable to undesirably leak out of the bearing. The worked penetration is more preferably in a range of 250-300.

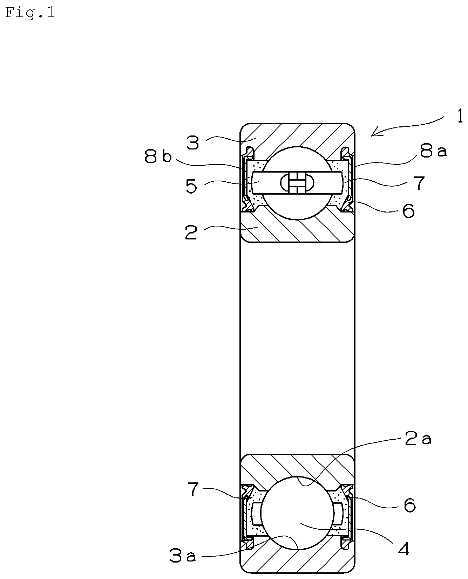

A grease-sealed bearing in which the grease composition of the present invention is sealed is described with reference to Fig. 1. Fig. 1 is a sectional view of a deep groove ball bearing. A rolling bearing 1 includes an inner ring 2 having an inner ring rolling surface 2a on an outer peripheral surface thereof, an outer ring 3 having an outer ring rolling surface 3a on an inner peripheral surface thereof, and a plurality of rolling elements 4. The inner ring 2 and the outer ring 3 are arranged coaxially with each other. The rolling elements 4 are arranged between the inner ring rolling surface 2a and the outer ring rolling surface 3a. The rolling elements 4 are retained by a cage 5. Axial end openings 8a, 8b between the inner ring and the outer ring are sealed by seal members 6. The above-described grease composition 7 is sealed around at least the rolling elements 4 in the space in the bearing. Each of the inner ring 2, the outer ring 3, and the rolling elements 4 is formed of steel material. The inner ring 2, the outer ring 3, and the rolling elements 4 are lubricated by the grease composition 7 interposed between the rolling elements 4 and the rolling surfaces.

The steel material that forms the bearing component such as the inner ring 2, the outer ring 3 and the rolling elements 4 in the rolling bearing 1 is any material generally used as a bearing material. Examples of the steel material include high carbon chromium bearing steel (SUJ 1, SUJ 2, SUJ 3, SUJ 4, SUJ 5, and the like; JIS G 4805), cement steel (SCr 420, SCM 420, and the like; JIS G 4053), stainless steel (SUS 440C and the like; JIS G 4303), high-speed steel (M 50 and the like), and cold-rolled steel. The seal member 6 may be formed as a single body of metal or rubber molded body, or alternatively the seal member 6 may be formed as a complex body of the rubber molded body and a metal plate, a plastic plate, or a ceramic plate. The complex body of the rubber molded body and the metal plate is preferable from a viewpoint of durability and easiness of adhesion.

Fig. 1 exemplarily shows a ball bearing as a bearing, however the grease-sealed bearing of the present invention is not limited to this. For example, the grease-sealed bearing of the present invention can be applied to a cylindrical roller bearing, a tapered roller bearing, a self-aligning roller bearing, a needle roller bearing, a thrust cylindrical roller bearing, a thrust tapered roller bearing, a thrust needle roller bearing, and a thrust self-aligning roller bearing.

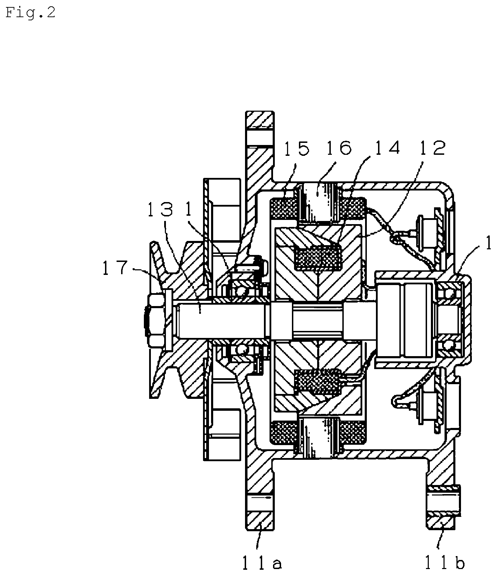

The grease-sealed bearing of the present invention applied to the automobile electric devices or the automobile auxiliary devices is described with reference to Fig. 2. Fig. 2 is a sectional view of a structure of an alternator. The alternator has a pair of frames 11a, 11b that form a housing serving as a stationary member, and a rotor rotational shaft 13 to which a rotor 12 is mounted, the rotor rotational shaft 13 being rotatably supported to the frames 11a, 11b using a pair of rolling bearings 1, 1 in which the above-described grease composition is sealed. A rotor coil 14 is mounted to the rotor 12. Three stator coils 16 are mounted by phases at 120 degrees to a stator 15 that is disposed on an outer periphery of the rotor 12. The rotor rotational shaft 13 is rotationally driven by rotational torque transmitted via a belt (not shown) to a pulley 17 mounted to a distal end of the rotor rotational shaft 13. The pulley 17 is mounted to the rotor rotational shaft 13 in a cantilever manner, and thus vibration is caused in response to the high speed rotation of the rotor rotational shaft 13. Accordingly, the rolling bearing 1 in particular that supports the rotor rotational shaft 13 at the side of the pulley 17 receives a severe load.

The grease-sealed bearing of the present invention is widely used in industrial fields and can be applied to various devices. For example, the grease-sealed bearing can be favorably applied to a motor bearing for an industrial machinery motor such as a ventilation fan motor, a fuel cell blower motor, a cleaner motor, a fan motor, a servo motor and a stepping motor; an electric device motor such as an automobile starter motor, an electric power steering motor, a steering adjusting tilt motor, a wiper motor and a power window motor; and an electric vehicle driving motor.

The grease-sealed bearing of the present invention can suppress the early-flaking due to the hydrogen embrittlement even in a severe use condition, so that its longtime use can be realized. Thus, the grease-sealed bearing of the present invention can be favorably used as a rolling bearing such as an electric auxiliary device and a servo motor that is used in a belt driving and a rapid acceleration and rapid deceleration condition.

### EXAMPLE

The present invention is described in detail with reference to Examples and Comparative examples that do not limit the present invention.

Each of the grease compositions having components shown in Table 1 was produced. The content of each of the base oil and the thickener in Table 1 shows a content rate (parts by mass) relative to 100 parts by mass of the base grease (the base oil + the thickener). The content of the additive shows a content rate (parts by mass) relative to 100 parts by mass of the base grease. Each of the grease compositions in Examples 1 to 9 contains the sodium molybdate as the additive. Further, each of the grease compositions in Examples 1 to 4, 8 and 9 contains the sorbitan-based ester, and each of the grease compositions in Examples 5 to 7 contains the Ca sulfonate (basic Ca sulfonate or neutral Ca sulfonate) or the Zn sulfonate as the metal sulfonate.

A rapid acceleration and deceleration test was executed by simulating the alternator as one example of the electric auxiliary device, using an inner ring rotating rolling bearing (the inner ring, the outer ring and the steel balls are formed of bearing steel SUJ 2) that supports the rotation shaft. Each produced grease composition was sealed in each rolling bearing. A load of 2,334 N applied to the pulley mounted to the distal end of the rotational shaft and a rotation speed of 0-18,000 rpm are set as a driving condition. The test was executed in a state in which an electric current of 0.5 A is applied to the bearing (6203) to be tested. The time (flaking generation lifetime, hours) until the test is stopped when the abnormal flaking is generated in the bearing and the vibration detector detects the vibration more than a set value was measured. Table 1 shows the average lifetime of six bearings in each example.

**Table 1**

| | | | Example | | | | | | | | | Comparative example | | | | | | | | | |
|---|---|---|---|---|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 | 6 | 7 | 8 | 9 | 10 |
| Base oil + Thickener (parts by mass) | | | | | | | | | | | | | | | | | | | | | |
| | Base oil | | | | | | | | | | | | | | | | | | | | |
| | | Alkyldiphe nyl ether oil 1) | - | - | - | 20 | 20 | 20 | 20 | 20 | 20 | - | - | 20 | - | 20 | 20 | 20 | 20 | 20 | 20 |
| | | Synthetic hydrocarbo n oil 2) | 25 | 85 | 25 | 60 | 60 | 60 | 60 | 60 | 60 | 25 | 85 | 60 | 25 | 60 | 60 | 60 | 60 | 60 | 60 |
| | | Ester oil 3) | 60 | - | 60 | - | - | - | - | - | - | 60 | - | - | 60 | - | - | - | - | - | - |
| | Thickener | | | | | | | | | | | | | | | | | | | | |
| | | Amine: p-toluidin e | - | - | - | 9. 3 | 9. 3 | 9. 3 | 9. 3 | 9. 3 | 9. 3 | - | - | 9. 3 | | 9. 3 | 9. 3 | 9. 3 | 9. 3 | 9. 3 | 9. 3 |
| | | Amine: cyclohexyl amine | 3. 11 | 3. 11 | 3. 11 | - | - | - | - | - | - | 3. 11 | 3. 11 | - | 3. 11 | - | - | - | - | - | - |
| | | Amine: octyl amine | 4. 05 | 4. 05 | 4. 05 | - | - | - | - | - | - | 4. 05 | 4. 05 | - | 4. 05 | - | - | - | - | - | - |
| | | Diisocyana te (MDI) | 7. 84 | 7. 84 | 7. 84 | 10 .7 | 10 .7 | 10 .7 | 10 .7 | 10 .7 | 10 .7 | 7. 84 | 7. 84 | 10 .7 | 7. 84 | 10 .7 | 10 .7 | 10 .7 | 10 .7 | 10 .7 | 10 .7 |
| Additive (parts by mass) | | | | | | | | | | | | | | | | | | | | | |
| | | Sorbitan trioleate 4) | 1 | 1 | 2 | 1 | - | - | - | - | 1 | - | - | - | - | - | - | - | - | - | - |
| | | Sorbitan monooleate 4') | - | - | - | - | - | - | - | 1 | - | - | - | - | - | - | - | - | - | - | - |
| | | Basic Ca sulfonate 5) | - | - | - | - | 1 | - | - | - | - | - | - | - | - | - | 3 | - | - | - | - |
| | | Neutral Ca sulfonate 6) | - | - | - | - | - | - | 1 | - | - | - | - | - | - | - | - | - | - | - | - |
| | | Zn sulfonate 7) | - | - | - | - | - | 1 | - | - | - | - | - | - | - | 3 | - | - | - | - | - |
| | | Ba sulfonate 8) | - | - | - | - | - | - | - | - | - | - | 1 | - | 1 | - | - | - | - | - | - |
| | | ZnDTC 9) | - | - | - | - | - | - | - | - | - | - | - | - | - | - | - | - | - | 1 | 0. 5 |
| | | Sodium molybdate 10) | 2 | 2 | 2 | 2 | 2 | 2 | 2 | 2 | 1 | 1 | 2 | 2 | 2 | 2 | 2 | 2 | - | 2 | 2 |
| Rapid acceleration and deceleration test | | | | | | | | | | | | | | | | | | | | | |
| | Flaking generation lifetime (hours) | | 44 | 46 | 47 | 52 | 60 | 47 | 49 | 43 | 48 | 29 | 24 | 26 | 25 | 23 | 21 | 33 | 19 | 21 | 23 |

| | | | | | | | | | | | | | | | | | | | | | |
|---|---|---|---|---|---|---|---|---|---|---|---|---|---|---|---|---|---|---|---|---|---|
| 1) Moresco Hilube LB68 produced by MORESCO Corporation, 69 mm²/s at 40 °C 2) SpectraSyn 10 produced by Exxon Mobil Corporation, 66 mm²/s at 40 °C 3) Unistar H-345 produced by NOF Corporation, 83 mm²/s at 40 °C 4) 4') Sorbitan-based ester produced by FUJIFILM Wako Pure Chemical Corporation 5) Sulfol CA-45 produced by MORESCO Corporation 6) Sulfol CA-45N produced by MORESCO Corporation 7) NA-SUL ZS produced by King Industries, Inc. 8) NA-SUL BSN produced by King Industries, Inc. 9) Vanlube AZ produced by Vanderbilt Chemicals, LLC 10) Sodium molybdate produced by FUJIFILM Wako Pure Chemical Corporation | | | | | | | | | | | | | | | | | | | | | |

In Comparative example 8, the additive is not compounded. In each of Comparative examples 1, 3 and 7, the sodium molybdate is only added as the additive. In each of Comparative examples 9 and 10, the sodium molybdate and the zinc dithiocarbamate (ZnDTC) are added as the additive. Against this, each of Examples 1 to 4, 8 and 9 that contains the sodium molybdate and the sorbitan-based ester as the additive shows the flaking lifetime that is 1.4 or more times as long as those of the above-described Comparative examples. In particular, Example 4 that does not contain the sorbitan trioleate, which is only one difference from Comparative example 3, shows the flaking lifetime that is two times as long as that of Comparative example 3. Example 4 that contains the sorbitan trioleate shows the flaking lifetime that is approximately 1.2 times as long as that of Example 8 that contains the sorbitan monooleate. In the composition that employs the aromatic diurea compound as the thickener, Example 4 in which the content of the sodium molybdate is two times as much as the sorbitan-based ester shows the flaking lifetime that is approximately 1.1 times as long as that of Example 9 in which the content of the sodium molybdate is equal to the sorbitan-based ester.

Each of Examples 5 to 7 that contains the sodium molybdate and the metal sulfonate of the Ca sulfonate or the Zn sulfonate as the additive shows the flaking lifetime that is 2.4 or more times as long as that of Comparative example 8. Each of Examples 5 to 7 shows the flaking lifetime that is 1.7 or more times as long as that of each of Comparative examples 2 and 4 that contains the Ba sulfonate. In particular, Example 5 that contains the basic Ca sulfonate shows the flaking lifetime that is approximately 1.2 times as long as that of Example 4. Further, Example 5 shows the flaking lifetime that is 1.2 or more times as long as that of Example 7 that contains the neutral Ca sulfonate and that of Example 6 that contains Zn sulfonate, and thus it is found that the flaking generation suppressing effect of the basic Ca sulfonate is especially high among the metal sulfonates.

Each of Examples 5 to 7 that contains the sodium molybdate and the metal sulfonate of the Ca sulfonate or the Zn sulfonate as the additive and contains the metal sulfonate by 1 part by mass relative to 100 parts by mass of the total of the base oil and the thickener shows the flaking lifetime that is two of more times as long as those of Comparative examples 5 and 6 in which the content of the Ca sulfonate or the Zn sulfonate is 3 parts by mass.

Example 4 that employs the aromatic diurea compound as the thickener shows the flaking lifetime that is approximately 1.2 times as long as that of Example 1 that employs the semi-aromatic diurea compound (having both of the aliphatic structure and the aromatic structure) as the thickener. Each of Comparative examples 9 and 10 that contains the sodium molybdate and the ZnDTC as the additive shows the flaking lifetime that is 0.6 or less times as long as those of Examples 4 to 8 having the same composition of the base grease and the content of the sodium molybdate to each other.

As described above, superior flaking generation suppressing effect can be realized by employing the sodium molybdate, and the sorbitan-based ester (in particular, sorbitan trioleate) or the metal sulfonate (a specific amount) . Further, in the composition that contains the metal sulfonate of the Ca sulfonate or the Zn sulfonate in the grease composition, even in a case in which the sodium molybdate is employed together with the metal sulfonate, when the content of the metal sulfonate is 3 or more parts by mass relative to 100 parts by mass of the total of the base oil and the thickener, the flaking generation suppressing effect is remarkably deteriorated.

### INDUSTRIAL APPLICABILITY

The grease composition of the present invention can effectively prevent the specific early-flaking with white structure change caused on the rolling surface, so that superior bearing lifetime of the rolling bearing can be obtained. The rolling bearing is suitable to, in particular, a rolling bearing for an automobile electric device or an automobile auxiliary device such as an alternator, an electromagnetic clutch for automobile air conditioners, an intermediate pulley and an electric fan motor, or a motor bearing for a servo motor.

### REFERENCE SIGNS LIST

1: rolling bearing
2: inner ring
3: outer ring
4: rolling element
5: cage
6: seal member
7: grease composition
8a, 8b: opening
11a, 11b: frame
12: rotor
13: rotor rotational shaft
14: rotor coil
15: stator
16: stator coil
17: pulley

## Claims

1. A grease composition comprising:
a base oil;
a thickener; and
an additive,
wherein:
the additive contains sodium molybdate, and also comprises at least a sorbitan-based ester or a metal sulfonate,
the metal sulfonate is Ca sulfonate or Zn sulfonate, the content of the sodium molybdate is 0.1 - 5 parts by mass relative to 100 parts by mass of the total of the base oil and the thickener, and
the content of the metal sulfonate is less than 3 parts by mass relative to 100 parts by mass of a total of the base oil and the thickener; **characterized in that** the grease composition containing the thickener by 10 to 20 mass% relative to the total amount of the base oil and the thickener.

2. The grease composition as defined in claim l, wherein the additive contains the sorbitan-based ester.

3. The grease composition as defined in claim 2, wherein the content of the sorbitan-based ester is equal to or less than the content of the sodium molybdate.

4. The grease composition as defined in claim 2 or 3 wherein the sorbitan-based ester is sorbitan trioleate.

5. The grease composition as defined in any one of claims 1 to 4, wherein the thickener is a diurea compound.

6. The grease composition as defined in any ono of claim l to 5, wherein the base oil contains poly-α-olefin oil.

7. The grease composition as defined in claim 1, wherein:
the additive contains the sorbitan-based ester,
the content of the sorbitan-based ester is equal to or less than the content of the sodium molybdate, and
the content of the sodium molybdate is O.1 - 5 parts by mass relative to 100 parts by mass of the total of the base oil and the thickener.

8. A grease-sealed bearing comprising:
an inner ring;
an outer ring;
a plurality of rolling elements that are interposed between the inner ring and the outer ring; and
a grease composition that is sealed around the rolling elements, the grease composition being defined in any one previous claim.

9. The grease-sealed bearing as defined in 8, wherein:
the grease-sealed bearing is configured to be used in a rapid acceleration and rapid deceleration condition, and the grease composition is configured to lubricate contact surfaces of iron-based metal members of the grease-sealed bearing.

## Patentansprüche

1. Eine Schmierfettzusammensetzung, umfassend:
ein Grundöl;
ein Verdickungsmittel; und
ein Additiv,
wobei
das Additiv Natriummolybdat enthält
und außerdem mindestens einen sorbitanbasierten Ester oder ein Metallsulfonat umfasst,
das Metallsulfonat Ca-Sulfonat oder Zn-Sulfonat ist,
der Gehalt an Natriummolybdat 0,1 bis 5 Masseteile relativ zu 100 Masseteilen der Gesamtmenge des Grundöls und des Verdickungsmittels beträgt und
der Gehalt an Metallsulfonat weniger als 3 Masseteile relativ zu 100 Masseteilen der Gesamtmenge des Grundöls und des Verdickungsmittels beträgt; **dadurch gekennzeichnet, dass** die Schmierfettzusammensetzung das Verdickungsmittel in einer Menge von 10 bis 20 Massenprozent, relativ zur Gesamtmenge des Grundöls und des Verdickungsmittels, enthält.

2. Schmierfettzusammensetzung nach Anspruch 1, wobei das Additiv den sorbitanbasierten Ester enthält.

3. Schmierfettzusammensetzung nach Anspruch 2, wobei der Gehalt an sorbitanbasiertem Ester gleich oder geringer ist als der Gehalt an Natriummolybdat.

4. Schmierfettzusammensetzung nach Anspruch 2 oder 3, wobei der sorbitanbasierte Ester Sorbitantrioleat ist.

5. Schmierfettzusammensetzung gemäß einem der Ansprüche 1 bis 4, wobei das Verdickungsmittel eine Diurea-Verbindung ist.

6. Schmierfettzusammensetzung gemäß einem der Ansprüche 1 bis 5, wobei das Grundöl Poly-α-olefinöl enthält.

7. Schmierfettzusammensetzung gemäß Anspruch 1, wobei:
das Additiv den sorbitanbasierten Ester enthält,
der Gehalt des sorbitanbasierten Esters gleich oder geringer ist als der Gehalt des Natriummolybdats, und
der Gehalt des Natriummolybdats 0,1 bis 5 Masseteile relativ zu 100 Masseteilen der Gesamtmenge des Grundöls und des Verdickungsmittels beträgt.

8. Ein fettgedichtetes Lager (1), umfassend:
einen Innenring (2);
einen Außenring (3);
eine Mehrzahl von Wälzkörpern (4), die zwischen dem Innenring (2) und dem Außenring (3) angeordnet sind; und
eine Schmierfettzusammensetzung, die um die Wälzkörper (4) herum abgedichtet ist, wobei die Schmierfettzusammensetzung in einem der vorhergehenden Ansprüche festgelegt ist.

9. Das fettgedichtete Lager (1) gemäß Anspruch 8, wobei das Lager für den Einsatz unter Bedingungen mit schneller Beschleunigung und schneller Verzögerung ausgelegt ist, und die Schmierfettzusammensetzung zum Schmieren der Kontaktflächen eisenbasierter Metallelemente des Lagers ausgelegt ist.

## Revendications

1. Composition de graisse comprenant :
une huile de base ;
un épaississant ; et
un additif,
dans laquelle :
l'additif contient du molybdate de sodium,
et comprend également au moins un ester à base de sorbitane ou un sulfonate métallique,
le sulfonate métallique est un sulfonate de Ca ou un sulfonate de Zn,
la teneur en molybdate de sodium est de 0,1 à 5 parties en masse pour 100 parties en masse du total de l'huile de base et de l'épaississant,
et la teneur en sulfonate métallique est inférieure à 3 parties en masse pour 100 parties en masse du total de l'huile de base et de l'épaississant ;
**caractérisée en ce que**
la composition de graisse contient l'épaississant en une quantité de 10 à 20 % en masse par rapport au total de l'huile de base et de l'épaississant.

2. Composition de graisse selon la revendication 1, dans laquelle l'additif contient l'ester à base de sorbitane.

3. Composition de graisse selon la revendication 2, dans laquelle la teneur en ester à base de sorbitane est inférieure ou égale à la teneur en molybdate de sodium.

4. Composition de graisse selon la revendication 2 ou 3, dans laquelle l'ester à base de sorbitane est le trioléate de sorbitane.

5. Composition de graisse selon l'une quelconque des revendications 1 à 4, dans laquelle l'épaississant est un composé de diurée.

6. Composition de graisse selon l'une quelconque des revendications 1 à 5, dans laquelle l'huile de base contient une huile de poly-α-oléfine.

7. Composition de graisse selon la revendication 1, dans laquelle :
l'additif contient l'ester à base de sorbitane,
la teneur en ester à base de sorbitane est inférieure ou
égale à la teneur en molybdate de sodium, et
la teneur en molybdate de sodium est de 0,1 à 5 parties en masse pour 100 parties en masse du total de l'huile de base et de l'épaississant.

8. Palier étanche à la graisse (1) comprenant :
une bague intérieure (2) ;
une bague extérieure (3) ;
une pluralité d'éléments roulants (4) interposés entre
la bague intérieure (2) et la bague extérieure (3) ; et
une composition de graisse scellée autour des éléments roulants (4), la composition de graisse étant définie dans l'une quelconque des revendications précédentes.

9. Palier étanche à la graisse (1) selon la revendication 8, dans lequel le palier est conçu pour être utilisé dans des conditions d'accélération et de décélération rapides, et la composition de graisse est conçue pour lubrifier les surfaces de contact des éléments métalliques à base de fer du palier.
